# EUROPÄISCHE PATENTSCHRIFT

(11) **EP 1 468 861 B1**
(45) Veröffentlichungstag und Bekanntmachung des Hinweises auf die Patenterteilung: **18.06.2008**
(21) Anmeldenummer: 04008149.9
(22) Anmeldetag: 02.04.2004
(51) Int. Cl.: B60K 25/06

(54) **Angetriebenes Zusatzelement mit Versorgungsaggregat für ein Kraftfahrzeug**
Driven attachment with accessory device for motor vehicle
Appareil supplémentaire entraîné avec dispositif auxiliaire pour véhicule automobile

(30) Priorität: 14.04.2003 DE 20306017 U
(43) Veröffentlichungstag der Anmeldung: 20.10.2004
(73) Patentinhaber: Ponte Vecchio Consult Sagl, 6600 Muralto (CH)
(72) Erfinder: Schübler, Hans Hubert, 45479 Mülheim an der Ruhr (DE)
(74) Vertreter: UEXKÜLL & STOLBERG

(56) Entgegenhaltungen:
- EP-A- 1 346 867
- DE-U- 20 214 999

## Beschreibung

Die Erfindung betrifft ein Zusatzelement für ein Kraftfahrzeug, insbesondere Lastkraftwagen, mit den Merkmalen des Oberbegriffes des Anspruches 1.

Ein gattungsgemäßes Zusatzelement für ein Kraftfahrzeug, das einen Motor und ein einen Abtriebsflansch aufweisendes Getriebe aufweist, mit einem Versorgungsaggregat, mit einer Gelenkwelle und mit einem Antriebsflansch, ist der DE 20214999 U1 zu entnehmen. Um ein Zusatzelement bereitstellen zu können, dass möglichst platzsparend ist und in einem geringen Abstand zu dem Getriebe mittels einer Gelenkwelle mit diesem verbunden werden kann, wird hier vorgeschlagen, dass der Antriebsflansch im wesentlichen in die gleiche Richtung weist wie der Abtriebsflansch, dass die Gelenkwelle das Getriebe mit einer Umlenkvorrichtung verbindet und dass die Umlenkvorrichtung die Drehbewegung der Gelenkwelle auf den Antriebsflansch überträgt.

Bei Zusatzelementen für Kraftfahrzeuge, insbesondere Lastkraftwagen, handelt es sich beispielsweise um Elemente, die einen Kompressor oder Generator als Versorgungsaggregat aufweisen. Neben dem Versorgungsaggregat sind in dem Zusatzelement noch weitere Einrichtung als Anschlusselemente vorgesehen. Bei den Anschlusselementen kann es sich um Luftkühler, Schalldämpfer oder dergleichen handeln, die an das Versorgungsaggregat angeschlossen sind. Das Zusatzelement wird von dem Motor des Lastkraftwagens über einen an dem Getriebe vorgesehenen Abtriebsflansch angetrieben, wobei das Zusatzelement und der Abtriebsflansch des Getriebes über eine Gelenkwelle miteinander verbunden sind.

Durch das Versorgungsaggregat ist vorgegeben, mit welchem Drehsinn dieses angetrieben werden muss. Das Versorgungsaggregat kann entweder ausschließlich linksdrehend oder ausschließlich rechtsdrehend angetrieben werden. Auf der anderen Seite ist der Drehsinn des Abtriebsflanschs am Getriebe bei Lastkraftwagen nicht einheitlich. Dies macht es erforderlich, das Versorgungsaggregat im Zusatzelement in zwei unterschiedlichen Positionen zu montieren in Abhängigkeit vom Drehsinn des Abtriebsflanschs und damit vom Fahrzeugtyp.

Da der für das Versorgungsaggregat und die Anschlusselemente zur Verfügung stehende Platz gering ist, müssen die Anschlusselemente möglichst nah an dem Versorgungsaggregat montiert werden und lange Rohrverbindungen sind auch aus anderen technischen Gründen nicht möglich. Daher ist es für herkömmliche Zusatzelemente erforderlich, je nach Drehsinn des Abtriebsflanschs und damit der Position des Versorgungsaggregats jeweils zwei Typen von Anschlusselementen bereitzustellen. Die ist mit erheblichen Kosten für Lagerhaltung und Herstellung verbunden. Außerdem ist es bei derartigen Zusatzelementen nicht möglich, ein einmal für einen Drehsinn vorgesehenes Zusatzelement in der Weise umzubauen, dass es auch an einem Fahrzeug mit einem Abtriebsflansch mit einem anderen Drehsinn verwendbar ist.

Der vorliegenden Erfindung liegt daher das technische Problem zugrunde, ein Zusatzelement gemäß dem Oberbegriff des Anspruchs 1 bereitzustellen, dass unabhängig vom Drehsinn des Abtriebsflansches des Getriebes des Kraftfahrzeuges mit jeweils einem einzigen Typ von Anschlusselementen versehen ist.

Dieses zuvor aufgezeigte technische Problem wird dadurch gelöst, dass das Anschlusselement einen ersten Anschluss und einen zweiten Anschluss aufweist und dass das Versorgungsaggregat in der ersten Position an den ersten Anschluss und in der zweiten Position an den zweiten Anschluss angeschlossen ist.
Durch das Vorsehen von zwei Anschlüssen an den Anschlusselementen können diese je nach Position des Versorgungsaggregats entweder über den einen oder den anderen Anschluss an das Versorgungsaggregat angeschlossen werden. Es ist nicht nötig, unterschiedliche Anschlusselemente für die beiden Fälle vorzusehen, sondern ein und dasselbe Element kann verwendet werden.

Dies führt dazu, dass einerseits die Kosten für die Herstellung der Zusatzelemente drastisch reduziert werden, da für Fahrzeuge mit Getrieben mit unterschiedlichem Drehsinn des Abtriebsflanschs im Wesentlichen dieselben Bauteile genutzt werden können. Damit entfällt ein erheblicher Teil der Lagerkosten.

Außerdem ist es möglich, ein zunächst für den einen Drehsinn hergestelltes Zusatzelement in einfacher Weise für auf den anderen Drehsinn umzurüsten. Dazu ist es lediglich notwendig, das Versorgungsaggregat in der Position anzubringen, in der es für den anderen Drehsinn angebracht sein muss, und im Übrigen die Anschlusselemente über die jeweils anderen Anschlüsse mit dem Versorgungsaggregat zu verbinden.

Als zusätzlicher Vorteil ergibt sich, dass ein erfindungsgemäßes Zusatzelement für die Montage sowohl auf der in Fahrtrichtung gesehen rechten Seite oder der in Fahrtrichtung gesehen linken Seite vorgesehen sein kann, ohne dass es notwendig ist, unterschiedliche Anschlusselemente zu verwenden.

Weitere Vorteile und bevorzugte Ausführungsformen gehen aus den Ausführungsbeispielen hervor.

Im Folgenden wird die Erfindung anhand von lediglich bevorzugten Ausführungsbeispielen beschrieben. In der Zeichnung zeigt
- Fig. 1: ein erstes erfindungsgemäßes Zusatzelement innerhalb eines Lastkraftfahrzeugchassis in Draufsicht,
- Fig. 2: ein zweites erfindungsgemäßes Zusatzelement innerhalb eines Lastkraftfahrzeugchassis in Draufsicht und
- Fig. 3: ein drittes erfindungsgemäßes Zusatzelement innerhalb eines Lastkraftfahrzeugchassis in Draufsicht, wobei das Zusatzelement auf der in Fahrtrichtung linken Seite angebracht ist.

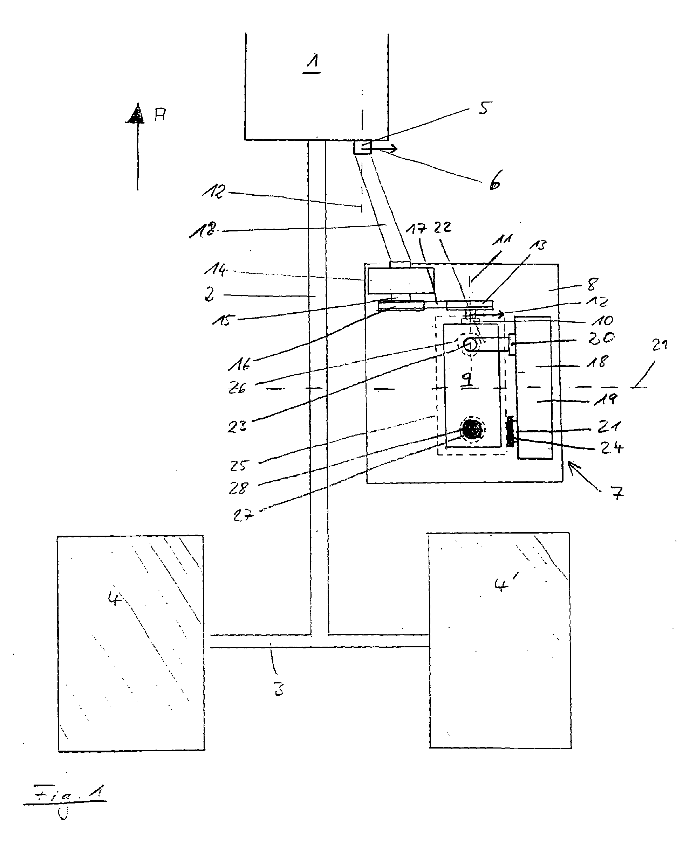

Fig. 1 zeigt den hinteren Teil des Chassis eines Lastkraftwagens, wobei das Chassis ein Getriebe 1 aufweist. Von dem Getriebe 1 aus erstreckt sich eine Welle 2 nach hinten zu einer Hinterachse 3 mit den Hinterrädern 4,4'. Das Getriebe 1 weist außerdem einen Abtriebsflansch 5 auf. Der Abtriebsflansch ist durch das Getriebe 1 mit rechtsläufigem Drehsinn antreibbar, wie durch den Pfeil 6 angedeutet.

Auf der in Fahrtrichtung (Pfeil A) gesehen rechten Seite der Antriebswelle 2 vor dem Hinterrad 4' ist ein Zusatzelement 7 angeordnet. Das Zusatzelement 7 umfasst eine Montageplattform 8, die in nicht dargestellter Weise mit dem Chassis verbunden ist. Auf der Montageplattform 8 ist ein Versorgungsaggregat angeordnet, das als Kompressor 9 ausgebildet ist.

Der Kompressor 9 weist einen Antriebsflansch 10 auf, wobei die Achse 11 des Antriebsflansches 10 parallel zur Achse 12 des Abtriebsflansches 5 verläuft. Außerdem weist der Antriebsflansch 10 in dieser ersten Position des Kompressors 9 zum Abtriebsflanschs 5 hin. Der Kompressor 9 ist nur mit einem Drehsinn antreibbar, der durch den Pfeil 12 angedeutet ist. Auf dem Antriebsflansch 10 des Kompressors 9 ist eine erste Riemenscheibe 13 angeordnet.

Außerdem weist das Zusatzelement 7 eine von einem Lagerbock 14 gehaltene Antriebswelle 15 auf, auf dessen einem Ende eine zweite Riemenscheibe 16 vorgesehen ist. Die erste Riemenscheibe 13 und die zweite Riemenscheibe 16 sind über einen Keilriemen 17 miteinander verbunden und bilden einen Riemenantrieb.

Das von der zweiten Riemenscheibe 16 abgewandte Ende der Antriebswelle 15 ist über eine Gelenkwelle 18 mit dem Abtriebsflansch 5 des Getriebes 1 verbunden.

Mittels der Gelenkwelle 18, der ersten und zweiten Riemenscheibe 13 und 16 und dem Keilriemen 17 wird die Drehbewegung des Abtriebsflanschs 5 auf den Kompressor 9 übertragen, wobei im vorliegenden Fall durch die Ausrichtung des Antriebsflanschs 10 zum Abtriebsflansch 5 sichergestellt ist, dass der Kompressor 9 auch mit dem erforderlichen richtigen Drehsinn angetrieben wird.
Auf der Montageplattform 8 ist außerdem ein als Luftkühler 19 ausgebildetes Anschlusselement für den Kompressor 9 vorgesehen. Der Luftkühler 19 weist einen ersten Anschluss 20 und einen zweiten Anschluss 21 auf, wobei der Luftkühler 19 in der in Fig. 1 dargestellten ersten Position des Kompressors 9 über den ersten Anschluss 20 mittels der Verbindung 22 mit dem am Kompressor 9 vorgesehenen Luftkühleranschluss 23 verbunden ist. Gleichzeitig ist der zweite Anschluss 21 des Luftkühlers 19 mit einem Blindflansch 24 abgedichtet.

Oberhalb des Kompressors 9 ist gestrichelt dargestellt ein Schalldämpfer 25 vorgesehen. Der Schalldämpfer 25 weist ebenfalls einen ersten Anschluss 26 und einen zweiten Anschluss 27 auf. Der Schalldämpfer ist dabei über den zweiten Anschluss 27 mit dem Schalldämpferanschluss 28 des Kompressors 9 verbunden.

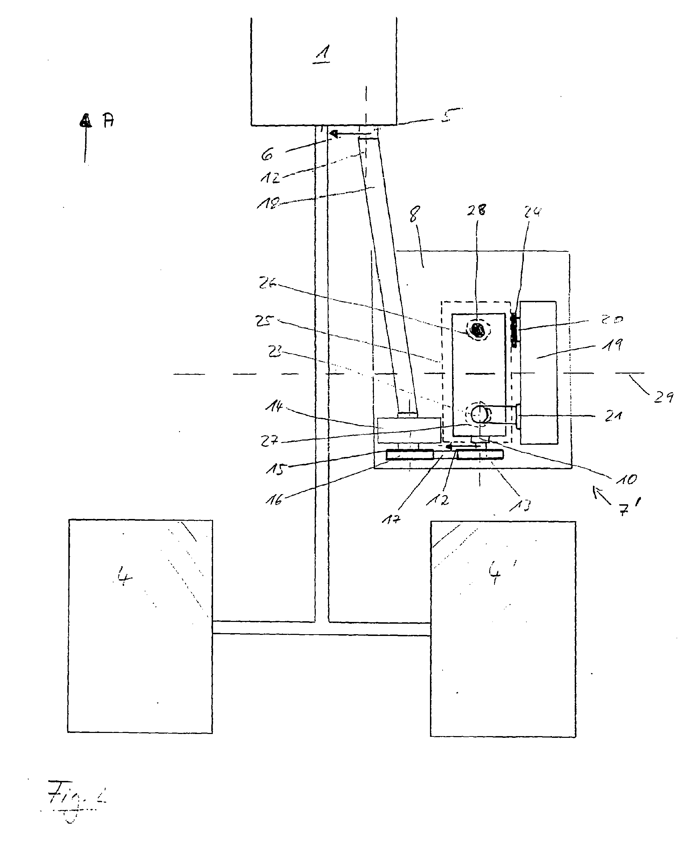

Das in Fig. 2 dargestellte Ausführungsbeispiel zeigt ein Chassis mit einem Getriebe 1', dessen Abtriebsflansch 5 mit linksläufigem Drehsinn antreibbar ist, wie durch Pfeil 6 in Fig. 2 dargestellt. Das Zusatzelement 7' weist einen Kompressor 9, einen Luftkühler 19 und einen Schalldämpfer 25 auf, die identisch zu denen des in Fig. 1 dargestellten Zusatzelements 7 sind. Insbesondere ist der Kompressor 9 nur mit dem gleichen Drehsinn antreibbar wie der in Fig. 1 gezeigte (s. Pfeil 12). Der Kompressor 9 ist dabei in einer zweiten Position in der Weise angeordnet, dass dessen Antriebsflansch 10 vom Abtriebsflansch 5 weg weist.

Beim Zusatzelement 7' ist der Lagerbock 14 mit der Antriebswelle 15 am hinteren Ende der Montageplattform 8 angebracht. Mittels der Gelenkwelle 18, der ersten und zweiten Riemenscheibe 13 und 16 sowie dem Keilriemen 17, wird die Drehbewegung des Abtriebsflanschs 5 auf den Kompressor 9 übertragen. Dabei ist dadurch, dass der Antriebsflansch 10 des Kompressors 9 vom Abtriebsflansch 5 weg weist, sichergestellt, dass der Kompressor 9 mit dem richtigen Drehsinn angetrieben wird.

Beim Zusatzelement 7' ist der Luftkühler 19 relativ zu seiner Symmetrieachse 29 in nahezu identischer Weise wie beim Zusatzelement 7 angeordnet. In diesem Fall ist der Luftkühleranschluss 23 des Kompressors 9 jedoch mit dem zweiten Anschluss 21 des Luftkühlers verbunden, während der erste Anschluss 20 mit dem Blindflansch 24 verschlossen ist.

Außerdem ist beim Zusatzelement 7' der Schalldämpfer 25 über seinen ersten Anschluss 26 mit dem Schalldämpferanschluss 28 des Kompressors 9 verbunden, während der zweite Anschluss 27 abgedichtet ist. Ansonsten ist der Schalldämpfer 25 in nahezu identischer Position im Vergleich zum Zusatzelement 7 angeordnet.

Durch das Vorsehen von zwei Anschlüssen an dem Lüftkühler 19 und dem Schalldämpfer 25 können in beiden Zusatzelementen 7,7' identische Luftkühler 19 und Schalldämpfer verwendet werden, obwohl der Kompressor 9 aufgrund des jeweils unterschiedlichen Drehsinns des Abtriebsflanschs 5 des Getriebes 1 in zwei unterschiedlichen Positionen angeordnet ist.

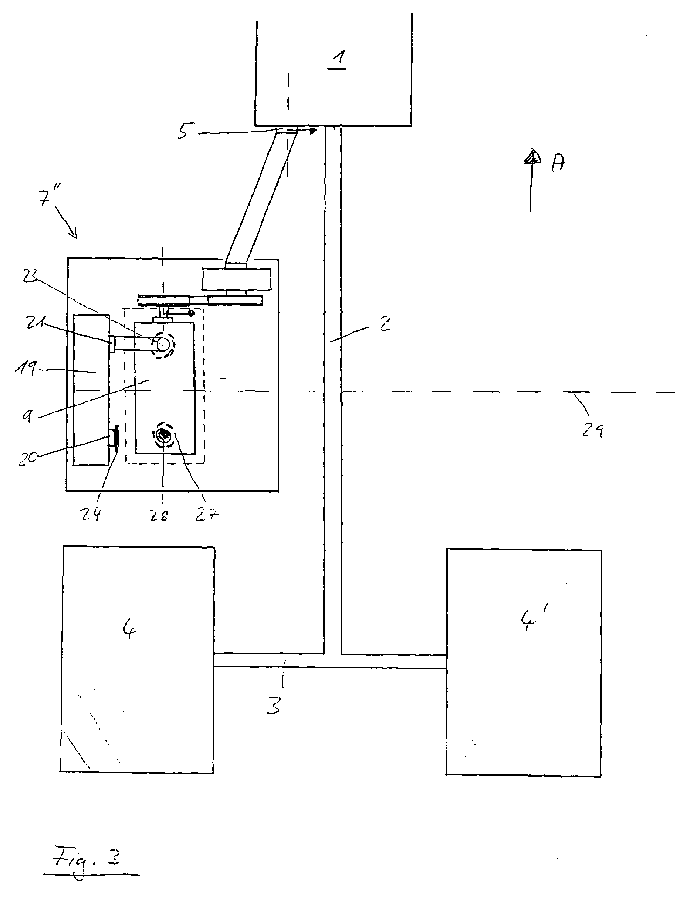

In Fig. 3 ist ein Chassis mit einem Getriebe 1 gezeigt, wobei der Abtriebsflansch 5 und das Zusatzelement 7" in Fahrtrichtung (Pfeil A) links von der Welle 2 angeordnet sind. Auch bei dem Zusatzelement 7" sind der Luftkühler 19 und der Schalldämpfer 25 identisch mit denen in den Zusatzelementen 7 und 7'. Der Luftkühler 19 ist über den zweiten Anschluss 21 mit dem Luftkühleranschluss 23 des Kompressors 9 verbunden und der Schalldämpfer 25 ist über seinen zweiten Anschluss 27 und den Schalldämpferanschluss 28 an den Kompressor 9 angeschlossen.

Somit können identische Bauteile für das Zusatzelement 7 auch dann verwendet werden, wenn es entweder auf der in Fahrtrichtung (Pfeil A) gesehen rechten oder linken Seite der Welle 2 angebracht wird.

## Patentansprüche

1. Zusatzelement (7,7',7")
- mit einer Montageplattform (8),
- mit einem auf der Montageplattform (8) vorgesehenen und von einem Abtriebsflansch (5) eines mit einem Motor eines Kraftfahrzeuges verbundenen Getriebes (1)antreibbaren Versorgungsaggregat (9) und
- mit wenigstens einem auf der Montageplattform (8) vorgesehenen Anschlusselement (19),
- wobei das Versorgungsaggregat (9) nur mit einem vorgegebenen Drehsinn antreibbar ist,
- wobei das Versorgungsaggregat (9) wenigstens einen Anschluss (23) aufweist, an dem das Anschlusselement (19) angeschlossenen ist,
**dadurch gekennzeichnet,**
- **dass** das Versorgungsaggregat (9) in Abhängigkeit des Drehsinns des Abtriebsflanschs (5) in einer ersten oder zweiten Position relativ auf der Montageplattform (8) befestigbar ist und
- **dass** das Anschlusselement (19) einen ersten Anschluss (20) und einen zweiten Anschluss (21) aufweist und
- **dass** das Versorgungsaggregat (9) in der ersten Position an den ersten Anschluss (20) angeschlossen ist und in der zweiten Position an den zweiten Anschluss (21) .

2. Zusatzelement (7,7',7") nach Anspruch 1,
**dadurch gekennzeichnet, dass** die Achse (12) des Abtriebsflanschs (5) und die Achse (11) des Antriebsflanschs (10) des Versorgungsaggregats (9) im wesentlichen parallel verlaufen.

3. Zusatzelement (7,7',7") nach Anspruch 2,
**dadurch gekennzeichnet, dass** in der ersten Position der Antriebsflansch (10) in Richtung des Abtriebsflansches (5) weist und in der zweiten Position der Antriebsflansch (10) vom Abtriebsflansch (5) weg weist.

4. Zusatzelement nach einem der Ansprüche 1 bis 3,
**dadurch gekennzeichnet, dass** das Versorgungsaggregat (9) ein Kompressor ist.

5. Zusatzelement (7,7',7") nach Anspruch 4,
**dadurch gekennzeichnet, dass** als Anschlusselement ein Schalldämpfer (25) vorgesehen ist.

6. Zusatzelement (7,7',7") nach Anspruch 4 oder 5,
**dadurch gekennzeichnet, dass** als Anschlusselement (19) ein Ansaugschalldämpfer vorgesehen ist.

7. Zusatzelement (7,7',7") nach einem der Ansprüche 4 bis 6,
**dadurch gekennzeichnet, dass** als Anschlusselement (19) ein Luftfilter vorgesehen ist.

8. Zusatzelement (7,7',7") nach einem der Ansprüche 4 bis 7,
**dadurch gekennzeichnet, dass** als Anschlusselement ein Luftkühler vorgesehen ist.

9. Zusatzelement (7,7',7") nach einem der Ansprüche 1 bis 3, **dadurch gekennzeichnet, dass** das Versorgungsaggregat (9) ein Generator ist.

10. Zusatzelement (7,7',7") nach einem der Ansprüche 1 bis 3, **dadurch gekennzeichnet, dass** das Versorgungsaggregat (9) eine Pumpe ist.

## Claims

1. Accessory (7, 7', 7")
- having a mounting platform (8),
- having a supply assembly (9) which is provided on the mounting platform (8) and can be driven by an output flange (5) of a gear mechanism (1) which is connected to an engine of a motor vehicle, and
- having at least one connecting element (19) which is provided on the mounting platform (8),
- wherein the supply assembly (9) can be driven only with a predefined rotational sense,
- wherein the supply assembly (9) has at least one connection (23) to which the connecting element (19) is connected, **characterized**
- **in that** the supply assembly (9) can be attached on the mounting platform (8) in a first relative or second relative position as a function of the rotational sense of the output flange (5), and
- **in that** the connecting element (19) has a first connection (20) and a second connection (21), and
- **in that** the supply assembly (9) is connected in the first position to the first connection (20) and in the second position to the second connection (21).

2. Accessory (7, 7', 7") according to Claim 1, **characterized in that** the axis (12) of the output flange (5) and the axis (11) of the drive flange (10) of the supply assembly (9) extend essentially parallel.

3. Accessory (7, 7', 7") according to Claim 2, **characterized in that**, in the first position, the drive flange (10) points in the direction of the output flange (5), and, in the second position, the drive flange (10) points away from the output flange (5).

4. Accessory according to one of Claims 1 to 3, **characterized in that** the supply assembly (9) is a compressor.

5. Accessory (7, 7', 7") according to Claim 4, **characterized in that** a silencer (25) is provided as a connecting element.

6. Accessory (7, 7', 7") according to Claim 4 or 5, **characterized in that** an intake silencer is provided as a connecting element (19).

7. Accessory (7, 7', 7") according to one of Claims 4 to 6, **characterized in that** an air filter is provided as a connecting element (19).

8. Accessory (7, 7', 7") according to one of Claims 4 to 7, **characterized in that** an air cooler is provided as a connecting element.

9. Accessory (7, 7', 7") according to one of Claims 1 to 3, **characterized in that** the supply assembly (9) is a generator.

10. Accessory (7, 7', 7") according to one of Claims 1 to 3, **characterized in that** the supply assembly (9) is a pump.

## Revendications

1. Elément supplémentaire (7, 7' 7")
- comprenant une plate-forme de montage (8),
- comprenant un appareil d'alimentation (9) prévu sur la plate-forme de montage (8) et pouvant être entraîné depuis un plateau de sortie (5) d'une boîte de vitesses (1) reliée au moteur d'un véhicule automobile, et
- comprenant au moins un élément de raccordement (19) prévu sur la plate-forme de montage (8),
- où l'appareil d'alimentation ne peut être entraîné que dans un sens de rotation prédéfini,
- où l'appareil d'alimentation (9) comprend au moins un raccord (23) auquel est raccordé l'élément de raccordement (19),
**caractérisé en ce que**
- l'appareil d'alimentation (9) peut être fixé sur la plate-forme de montage (8) dans une première position ou une deuxième position relative, en fonction du sens de rotation du plateau de sortie (5), et **en ce que**
- l'élément de raccordement (19) comporte un premier raccord (20) et un deuxième raccord (21), et **en ce que**
- dans la première position, l'appareil d'alimentation (9) est raccordé au premier raccord (20), et dans la deuxième position, au deuxième raccord (21).

2. Elément supplémentaire (7, 7', 7") selon la revendication 1,
**caractérisé en ce que** l'axe (12) du plateau de sortie (5) et l'axe (11) du plateau d'entrée (10) de l'appareil d'alimentation (9) s'étendent essentiellement parallèlement l'un à l'autre.

3. Elément supplémentaire (7, 7', 7") selon la revendication 2,
**caractérisé en ce que**, dans la première position, le plateau d'entrée (10) est orienté en direction du plateau de sortie (5), et que, dans la deuxième position, le plateau d'entrée (10) est orienté dans le sens s'éloignant du plateau de sortie (5).

4. Elément supplémentaire (7, 7', 7") selon l'une des revendications 1 à 3,
**caractérisé en ce que** l'appareil d'alimentation (9) est un compresseur.

5. Elément supplémentaire (7, 7', 7") selon la revendication 4,
**caractérisé en ce qu'**un silencieux (25) est prévu en tant qu'élément de raccordement.

6. Elément supplémentaire (7, 7', 7") selon la revendication 4 ou 5,
**caractérisé en ce qu'**un silencieux d'aspiration est prévu en tant qu'élément de raccordement (19).

7. Elément supplémentaire (7, 7', 7") selon l'une des revendications 4 à 6,
**caractérisé en ce qu'**un filtre à air est prévu en tant qu'élément de raccordement (19).

8. Elément supplémentaire (7, 7', 7") selon l'une des revendications 4 à 7,
**caractérisé en ce qu'**un refroidisseur d'air est prévu en tant qu'élément de raccordement.

9. Elément supplémentaire (7, 7', 7") selon l'une des revendications 1 à 3,
**caractérisé en ce que** l'appareil d'alimentation (9) est un générateur.

10. Elément supplémentaire (7, 7', 7") selon l'une des revendications 1 à 3,
**caractérisé en ce que** l'appareil d'alimentation (9) est une pompe.
